# EUROPEAN PATENT APPLICATION

(11) **EP 3 621 008 A1**
(43) Date of publication of application: **11.03.2020**
(21) Application number: 18205550.9
(22) Date of filing: 10.11.2018
(51) Int. Cl.: G06Q 10/08, G06Q 10/10, G06Q 10/06

(54) **SMART REMINDER SYSTEM FOR A STORAGE CONTAINER**

(30) Priority: 07.09.2018 CN 201811046378
(71) Applicant: Guo, Zebin, Shantou City, Guangdong (CN)
(72) Inventor: Guo, Zebin, Shantou City, Guangdong (CN)
(74) Representative: de Arpe Fernandez, Manuel

(57) **Abstract**

The smart reminder system includes a label (10) containing a QR code (11) and a mobile device (200). The QR code (11) is located on a storage container (100) for identifying the storage container (100). The mobile device (200) is used to read the QR code (11) and record a reminder associated with the QR code (11). The storage container (100) can be identified by the use of a scanning function which communicates with a user regarding the storage container (100). The mobile device (200) may include a separate application, an official account function of an ecosystem such as WeChat, or an applet function of WeChat. The storage container (100) is low cost, easy to produce, widely used, and includes powerful features. The material of the storage container (100) may vary and the component of the storage container (100) can be interchangeable.

## Description

### Field of the Invention

The present disclosure relates to the field of the internet of things, and in particular, it relates to a smart reminder system for a storage container.

### Background of the Invention

QR code has been used in several application scenarios, such as airports, restaurants, buses, cinemas, meetings, media, or travelling. The QR code can be used in the products identification, such as QR code shopping, railway ticket checking, apartment seeking, etc. QR code may also be easily scanned by any cellphones, where there are specific applications having the capacity to read the link and take the client in potential for the website the company wants or shopping sites. There are several applications available on the Internet specific for reading QR code and almost all cellphones may download. Thus, the use of "QR code" became popular together with the use of the Internet in cellphones.

Storage containers are basic products in people's daily life and have a very high frequency of use. To develop a series of daily necessities that can improve the efficiency and convenience of daily life of the people, reduce the consumption of living time, and improve the use experience of daily necessities. Under the background of the brand, smart daily necessities will be an important direction for the future to reform. For example, in a busy life, we often have some uneaten food in the refrigerator, or stayed in the corner. It is usually discovered after the consumption period, which causes great waste of food.

### Summary of the Invention

The technical problem to be solved by the present invention is to provide a smart reminder system, and more particularly to a smart reminder system for a storage container.

In order to solve the above technical problem, one embodiment of the invention provides the following technical solution:
One embodiment of the invention provides a smart reminder system for a storage container. The smart remaindering system includes a label containing a QR code, and a mobile device. The QR code is located on the storage container for identifying the storage container. The mobile device is used to read the QR code and record a reminder associated with the QR code.

As a preferred technical solution of the embodiment of the invention, the mobile device comprises an application unit configured to be executed by a processor to read the QR code, the application unit is a separate application, an official account function of WeChat, or an applet function of WeChat.

As a preferred technical solution of the embodiment of the invention, the QC code is associated with a basic function of a user account.

As a preferred technical solution of the embodiment of the invention, the basic function of the user account comprises a customized reminder, a daily assistant management and recommendation for food and other storage, or a use suggestion and function extension suggestion of the food and the other storage.

As a preferred technical solution of the embodiment of the invention, the customized reminder, the daily assistant management and recommendation for food and other storage, and the use suggestion and function extension suggestion of the food and the other storage are configured to be executed by the mobile device, the mobile device is configured to automatic reminder when the customized reminder is triggered, and the mobile device is connected to a smart speaker to realize smart voice reminder.

As a preferred technical solution of the embodiment of the invention, the storage container is one of a preservation box, a lunch box, a pill box, a medicine chest, a storage box, a storage bag, and a packing box.

As a preferred technical solution of the embodiment of the invention, the QR code is a tags or a print.

As a preferred technical solution of the embodiment of the invention, the storage container is made from plastic, glass, stainless steel, silica gel, or ceramics.

In the embodiment above, the storage container may has the following advantages: first, the storage container is low cost, easy to produce, widely used, and includes powerful features. Second, the material may vary, and the component of the storage container can be interchangeable. Third, the QR code is in form of the tags or the print according to a type of the storage container. Forth, the storage container can be identified by the use of a scanning function which communicates with a user regarding the storage container. Fifth, the mobile device reading the storage device through the scanning function is realized through a self-development program to identify and manage the storage container.

### Brief Description of the Drawings

The drawings are used for providing further understanding of the present invention, constitute a part of the description and are used for explaining the present invention together with the embodiment of the present invention, but do not constitute a limitation to the present invention. In the drawings:

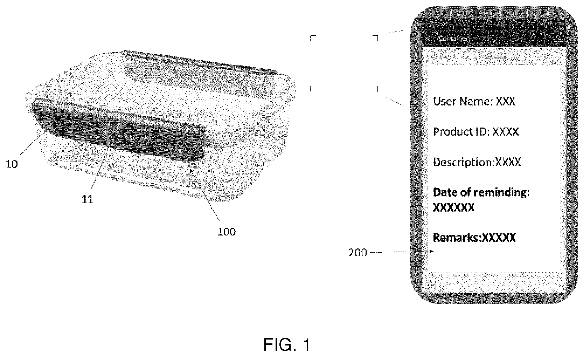

FIG. 1 is a schematic view of one embodiment of a smart reminder system.

### Detailed Description of the Embodiments

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts have been exaggerated to better illustrate details and features of the present disclosure.

Several definitions that apply throughout this disclosure will now be presented.

### Embodiment 1

As shown in FIG. 1, a smart reminder system includes a storage container 100 and a mobile device 200. The storage container 100 includes a label 10 containing a QR code 11. The QR code 11 is located on the storage container 100 for identifying the storage container 100. The mobile device 200 can read the QR code 11 of the label 10 and can record or read a reminder associated with the QR code 11. The mobile device 200 includes an application unit which can be executed by a processor to read the QR code 11. The application unit can be a separate application, an official account function of an ecosystem such as WeChat, or an applet function of WeChat. The QC code is associated with a basic function of a user account. The basic function of the user account includes a customized reminder, a daily assistant management and recommendation for food and other storage, or a use suggestion and function extension suggestion of the food and the other storage. The customized reminder, the daily assistant management and recommendation for food and other storage, and the use suggestion and function extension suggestion of the food and the other storage can be executed by the mobile device 200. The mobile device 200 can reminder when the customized reminder is triggered. The mobile device 200 is connected to a smart speaker to realize smart voice reminder. The storage container can be one of a preservation box, a lunch box, a pill box, a medicine chest, a storage box, a storage bag, a packing box, a water bottle, or a milk bottle.

Food or other storage can be classified and can be stored in different storage containers. A user can use an application of the mobile device, such as WeChat, to read the QR code on one of the storage containers. The application can enter to a control page to set a management function associating with the storage in the storage container. The management function can include overdue reminder, retrieving in regular intervals, instructions remarking, voice note, voice reminder, and other associating functions.

The management function can be controlled by a function of the application of the mobile device, such as a scanning function of WeChat. If food is stored in the storage container, the mobile device can manage the overdue reminder before food due date, and manage an eating reminder in regular intervals to remind the user to eat the rest food in time. Nutrition information of the food in the storage container can be shown, and can provide nutrition intake suggestions. Thus, healthy diet can be well managed. Furthermore, in term of food material, a cookbook and food cooking information of the associating food can be suggested through the mobile device. Other associating food in the cookbook can also be suggested, so that it can broaden a variety of dishes. The storage container 100 is usually owned by the people who use the smartphone.

### Embodiment 2

Extension from the embodiment 1, the QR code 11 can be a tags or a print. The QR code 11 can be the unique identification of the storage container. The QR code 11 can be in form of the tags or the print according to a type of the storage container. The storage container can be identified by the use of the scanning function which communicates with the user regarding the storage container.

### Embodiment 3

The storage container 100 can be made from plastic, glass, stainless steel, silica gel, or ceramics. The storage container has a wide range of use, has a wide people application, and is easily to use. The martial of the storage container is also not restricted. Components of the storage containers can be interchanged, and accessories are not need to be changed.

### Examples

People and operation methods. Mobile device users are applied. Food or other storage being stored can be classified and can be stored in different storage containers. A user can use an application of the mobile device, such as WeChat™, to read the QR code on one of the storage containers. The application can enter to a control page to set a management function associating with the storage in the storage container. The management function can include overdue reminder, retrieving in regular intervals, instructions remarking, voice note, voice reminder, and other associating functions.

### Example 1

A user named Mr. Zhang, Male, 24 years old, and he is a designer. Zhang used to buy a plurality of food and store them in the refrigerator once a week. The stored food can be enjoyed in the workdays. A plurality of food may be left and go bad in the weekend. He may forget to enjoy some left food in time.

The storage container can be used to store the left food. He may use WeChat to read the QR code on one of the storage containers to record the left food, such as due date of the food, matching way of the food, and the voice reminder before put it into the refrigerator. After a week, he realized that the food is rarely wasted due to the reminders of the storage container. He also had regular meals, and physical fitness is improved.

### Example 2

A user named Liu, female, 27 years old, and the first child's lactation period ended in April 2017. Due to lack of experience in feeding food supplements to children, she used to neglect of the child's feeding time. The child was crying, even the nutritional supply of the child is insufficient.

The storage container can be used to store milk powder and nutrient solution every day. She may use WeChat to read the QR code on one of the storage containers to set water temperature and concentration according to the food distribution guidance, and then set voice reminder based on your child's normal eating time. A week later, Liu found that due to voice reminders and reasonable food allocation, the child did not sustain crying. In more than a month, not only Liu familiars with the child's dietary arrangements, but also the child with nutrition, and child's immunity is significantly improved.

### Example 3

A user named Zhao, female, 50 years old, and she is patient with diabetes for many years. Zhao is a financial manager of a foreign company. For many years, she needs to drink special liquid medicine on time every day. Because of busy work, she often forgot to drink. The special liquid medicine is prescribed by Specialist collocations, and are not only expensive but also time-critical (the syrup is a mixture of liquid and solid drugs, and the due period is two hours after mixed). This not only causes waste but also did not improve diabetes.

The storage container can be used to store the liquid medicine and the solid medicine separately. A time reminder and a dose reminder were set after the WeChat scan. A week later, Zhao found that due to time reminders and dose reminder, not only the drug is not waste, but also blood glucose was controlled.

The embodiments shown and described above are only examples. Many details are often found in the art such as the other features of a system for generating picture thumbnail. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size and arrangement of the parts within the principles of the present disclosure up to, and including the full extent established by the broad general meaning of the terms used in the claims. It will therefore be appreciated that the embodiments described above may be modified within the scope of the claims.

## Claims

1. A smart reminder system for a storage container (100), being **characterized in that** the smart reminder system comprising:
a label (10) containing a QR code (11) being located on the storage container (100) for identifying the storage container (100); and
a mobile device (200) for reading the QR code (11) and recording a reminder associated with the QR code (11).

2. The smart reminder system for a storage container (100) of claim 1, wherein the mobile device (200) comprises an application unit configured to be executed by a processor to read the QR code (11), the application unit is a separate application, an official account function of WeChat, or an applet function of WeChat.

3. The smart reminder system for a storage container (100) of claim 1, wherein the QC code (11) is associated with a basic function of a user account.

4. The smart reminder system for a storage container (100) of claim 3, wherein the basic function of the user account comprises a customized reminder, a daily assistant management and recommendation for food and other storage, or a use suggestion and function extension suggestion of the food and the other storage.

5. The smart reminder system for a storage container (100) of claim 4, wherein the customized reminder, the daily assistant management and recommendation for food and other storage, and the use suggestion and function extension suggestion of the food and the other storage are configured to be executed by the mobile device (200), the mobile device (200) is configured to automatic reminder when the customized reminder is triggered, and the mobile device (200) is connected to a smart speaker to realize smart voice reminder.

6. The smart reminder system for a storage container (100) of claim 1, wherein the storage container (100) is one of a preservation box, a lunch box, a pill box, a medicine chest, a storage box, a storage bag, and a packing box.

7. The smart reminder system for a storage container (100) of one of claims 1-6, wherein the QR code (11) is a tags or a print.

8. The smart reminder system for a storage container (100) of one of claims 1-6, wherein the storage container (100) is made from plastic, glass, stainless steel, silica gel, or ceramics.
